Europäisches Patentamt

European Patent Office

Office européen des brevets

(11) Veröffentlichungsnummer : **0 111 474**
**B1**

(12) **EUROPÄISCHE PATENTSCHRIFT**

(45) Veröffentlichungstag der Patentschrift :
28.05.86

(21) Anmeldenummer : **83890223.7**

(22) Anmeldetag : **09.12.83**

(51) Int. Cl.⁴ : **B 23 K 11/32**, B 21 F 27/10

(54) **Elektrische Vielpunkt-Widerstandsschweissmaschine, insbesondere zur Herstellung von geschweissten Gittern.**

(30) Priorität : **14.12.82 AT 4539/82**

(43) Veröffentlichungstag der Anmeldung :
**20.06.84 Patentblatt 84/25**

(45) Bekanntmachung des Hinweises auf die Patenterteilung : **28.05.86 Patentblatt 86/22**

(84) Benannte Vertragsstaaten :
**BE CH DE FR GB IT LI NL**

(56) Entgegenhaltungen :
**EP-A- 0 030 934**
**AT-B- 351 904**
**FR-A- 844 326**
**GB-A- 677 357**
**US-A- 2 033 851**

(73) Patentinhaber : **EVG Entwicklungs- u. Verwertungs-**
**Gesellschaft m.b.H.**
**Vinzenz-Muchitsch-Strasse 36**
**A-8011 Graz (AT)**

(72) Erfinder : **Ritter, Gerhard, Dipl.-Ing. Dr.**
**Unterer Plattenweg 47**
**A-8043 Graz (AT)**
Erfinder : **Ritter, Klaus, Dipl.-Ing.**
**Peterstalstrasse 157**
**A-8042 Graz (AT)**
Erfinder : **Jahrbacher, Gerhard, Dipl.-Ing.**

**A-8120 Peggau 163 (AT)**

(74) Vertreter : **Holzer, Walter, Dipl.-Ing. et al**
**Patentanwälte Dipl.-Ing. Dr.techn. Schütz Alfred**
**Dr.phil. Mrazek Engelbert Dipl.-Ing. Holzer Walter**
**Dipl.-Ing. Pfeifer Otto Fleischmanngasse 9**
**A-1040 Wien (AT)**

**Beschreibung**

Die Erfindung betrifft eine Vielpunkt-Widerstandsschweißmaschine, bei welcher den Schweißstellen Stromimpulse von einer mittels Transformatoren gespeisten Gleichrichtereinheit über zwei quer zur Schweißmaschine verlaufende Stromschienen zugeführt werden. Solche Maschinen sind insbesondere zur Schweißung von Gittern aus Längs- und Querdrähten erwünscht.

Eine Maschine der angegebenen Gattung ist aus der AT-A-351 904 bekannt. Die Schweißelektrodenanordnung und die Stromzuführungen dieser bekannten Maschine sind wie bei den üblichen, mit Wechselstrom betriebenen und nach der sog. Doppelpunkt-Schweißmethode arbeitenden Vielpunkt-Widerstandsschweißmaschinen getroffen, d. h. es sind auf der gleichen Seite der Gitterherstellungsebene zwei von Transformatoren gespeiste Stromschienen angeordnet, die abwechselnd mit den entgegengesetzt gepolten Stromschienen leitend verbundene Reiterelektroden tragen, wobei der Stromkreis über je zwei Schweißpunkte auf der gegenüberliegenden Seite der Gitterherstellungsebene durch eine passive Strombrücke geschlossen wird.

Diese Maschine bietet zwar alle Vorteile der Gleichstromschweißung, insbesondere eine sehr günstige Ausbildung und hohe Festigkeit der Schweißpunkte, ist jedoch mit dem Nachteil aller bekannten, mit Strombrücken arbeitenden Maschinen behaftet, daß nämlich das Umstellen der Maschine von einer gegebenen Längsdrahtteilung auf eine andere sehr zeitraubend und auch aufwendig ist, weil den unterschiedlichen Längsdrahtteilungen entsprechende Sätze von Strombrücken vorgesehen werden müssen und die jeweils an der Maschine montierten Strombrücken beim Übergang auf eine andere Längsdrahtteilung gegen einen Satz anderer Strombrücken ausgetauscht werden müssen.

Die Erfindung geht nun davon aus, daß die Umstellung einer Schweißmaschine, deren Elektroden über Stromschienen gespeist werden, auf unterschiedliche Längsdrahtteilungen wesentlich einfacher ist, wenn die Stromschienen auf entgegengesetzten Seiten der Gitterherstellungsebene angeordnet werden und statt der Doppelpunktdie Einzelpunkt-Schweißmethode angewendet wird, bei welcher jeder Schweißpunkt unmittelbar zwischen einem Plus- und einem Minuspol liegt.

Um mit Einzelpunktschweißstrecken, die über Stromschienen mit Gleichstrom gespeist werden, gleichmäßige Schweißungen zu erzielen, sollte es genügen, darauf Bedacht zu nehmen, daß die Wirkwiderstände in allen Schweißstromkreisen gleich groß sind. Überraschenderweise hat sich aber in der Praxis gezeigt, daß diese Maßnahme nicht ausreicht, daß vielmehr darüber hinaus noch eine bestimmte Anordnung der Stromschienen und der Zuleitungen zu diesen getroffen werden muß.

Da moderne Vielpunkt-Widerstandsschweißmaschinen bei der Herstellung geschweißter Gitter mit sehr hohen Hubzahlen arbeiten (es werden mehr als 100 Querdrähte pro Minute an die Längsdrähte angeschweißt), wird nämlich der Schweißstrom etwa zweimal je Sekunde ein- und wieder ausgeschaltet, wobei die eigentliche Einschaltzeit, während welcher Strom fließt, sehr kurz ist und nur etwa zwei bis drei Wechselstromperioden beträgt. Die Folge dieser notwendigerweise mit kurzen Stromimpulsen arbeitenden Betriebsweise ist, daß sich die beim Aufbau und beim Abbau magnetischer Felder auftretenden Effekte sehr stark und nachteilig fühlbar machen. Es müssen deshalb, um gleichmäßige Schweißungen sicherzustellen, für jeden einzelnen Schweißpunkt längs der sich über die Maschinenbreite erstreckenden Schweißlinie auch hinsichtlich der induktiven Widerstände möglichst gleiche Bedingungen geschaffen werden.

Die geschilderten Aufgaben sind bei einer erfindungsgemäßen Einrichtung der einleitend angegebenen Gattung dadurch gelöst, daß die Stromschienen auf entgegengesetzten Seiten der Schweißebene angeordnet und die beiden Pole der Gleichrichtereinheit je mit einem der entgegengesetzten Enden der beiden Stromschienen verbunden sind und daß die sich hierbei infolge des unterschiedlichen Verlaufes der Stromschleifen über die einzelnen Schweißstellen ergebenden Unterschiede der für die Stromimpulse wirksamen Induktivitäten im wesentlichen ausgeglichen sind, indem die Sammelschienen der Gleichrichtereinheit parallel zu den die Elektroden speisenden Stromschienen angeordnet sind und die Stromschienen gleich weit von der Mittellinie der Sammelschienen entfernt sind und unmittelbar oder über kurze Leitungen mit den Elektroden verbunden sind, oder indem mit den entgegengesetzten Enden der beiden Stromschienen die beiden Pole einer antisymmetrisch zur ersten Gleichrichtereinheit auf der gegenüberliegenden Seite der Schweißebene angeordneten zweiten Gleichrichtereinheit in Parallelschaltung verbunden sind.

Wie später noch genauer erläutert wird, können durch die angegebene Anordnung und Speisung der Stromschienen nicht nur im wesentlichen gleich lange Stromwege über alle Schweißstellen und damit im wesentlichen gleich große Wirkwiderstände in den Schweißstromkreisen gesichert werden, sondern auch die in den einzelnen Schweißstromkreisen wirksamen Induktivitäten im wesentlichen aneinander angeglichen werden.

Bei einer einfachen, einen nachträglichen Induktivitätsabgleich ermöglichenden Ausführungsform der Erfindung werden auf der einen Seite der Schweißebene die Schweißelektroden unmittelbar von der einen Stromschiene getragen oder gebildet, während sich auf der gegenüberliegenden Seite der Schweißebene einzeln verstellbare Elektroden befinden, die mit der zweiten Stromschiene über einstellbare Impe-

danzen, vorzugsweise Stichleitungen mit einem verstellbaren Schieber, enthaltende Leitungen verbunden sind.

Mit Vorteil werden die in den Schweißstromkreisen wirksamen Induktiven von vornherein dadurch klein gehalten, daß alle im Nahbereich der Stromschienen angeordneten Maschinenteile, insbesondere die Trag- und Anpreßbalken für die Elektroden, aus nichtmagnetisierbarem Werkstoff, z. B. nichtmagnetisierbarem Stahl, bestehen.

Zum gleichen Zweck sollen die beiderseits des Anpreßbalkens für die Elektroden liegenden Ständerteile des Maschinenrahmens von den äußersten Elektroden einen Abstand haben, der ein Mehrfaches des gegenseitigen Elektrodenabstandes beträgt.

Die Erfindung wird nun anhand von Ausführungsbeispielen unter Bezugnahme auf die Zeichnungen näher beschrieben. Es zeigen :

Figur 1 das Schaltschema einer ersten Ausführungsform einer Maschine nach der Erfindung,

Figur 2 eine Seitenansicht einer Maschine nach Figur 1,

die Figuren 3 bis 5 schematisch die von dem ausgewählte Elektroden anspeisenden Strom umflossenen Flächen jeweils in Frontansicht (Figuren 3a, 4a, 5a), Seitenansicht (Figuren 3b, 4b, 5b) und Draufsicht (Figuren 3c, 4c, 5c),

Figur 6 das Schaltschema einer zweiten Ausführungsform einer Maschine nach der Erfindung und

Figur 7 eine Seitenansicht zu Figur 6.

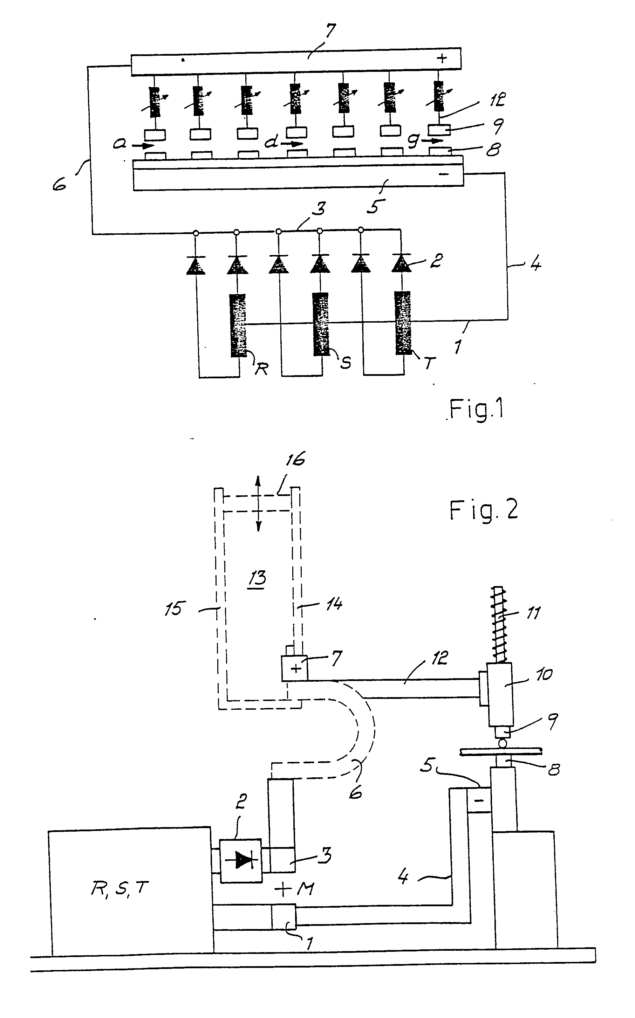

Man erkennt in Figur 1 die Sekundärwicklungen von den drei Phasen eines Drehstromnetzes zugeordneten Transformatoren R, S, T, deren Mittelanzapfungen mit einer Sammelschiene 1 und deren Enden über zwischengeschaltete Gleichrichterdioden 2 mit einer Sammelschiene 3 verbunden sind. In dieser Schaltungsanordnung bildet die Sammelschiene 1 den Minus- und die Sammelschiene 3 den Pluspol einer Gleichrichtereinheit.

Die Sammelschiene 1 ist über eine Leitung 4 mit einer sich unter der Schweißebene quer über die gesamte Maschinenbreite erstreckenden Stromschiene 5 elektrisch leitend verbunden, wobei im gewählten Ausführungsbeispiel die Leitung 4 an das rechte Ende der Stromschiene 5 angeschlossen ist.

Die Sammelschiene 3 ist über eine Leitung 6 mit dem linken Ende der sich oberhalb der Schweißebene quer über die Maschinenbreite erstreckenden Stromschiene 7 verbunden. Diese Leitung 6 wird durch biegsame, leitende Bänder gebildet, die seitlich an der Stromschiene 5 vorbeigeführt werden, was durch die strichlierte Darstellung in Figur 2 zum Ausdruck gebracht werden soll.

Die unteren Elektroden 8 sind unmittelbar mit der Stromschiene 5 verbunden. Die oberen Elektroden 9 sind an Elektrodenträgern 10 montiert, die gegenüber einem nicht dargestellten auf- und abbewegbaren Anpreßbalken bekannter Bauweise, der auch die Stromschiene 7 trägt, durch Federn 11 elastisch abgestützt sind. Über kurze, biegsame Bänder 12 sind die Elektroden 9 mit der Stromschiene 7 leitend verbunden.

Man erkennt aus Figur 1 unmittelbar, daß die Wirkwiderstände bezüglich aller Elektroden gleich groß sein müssen, weil sich die in der Stromschiene 7 von deren Anschluß an die Leitung 6 bis zu einer beliebigen Elektrode 9 zurückgelegte Wegstrecke des Stromes und die in der Stromschiene 5 von der dieser Elektrode 9 zugeordneten Elektrode 8 bis zum Anschluß an die Leitung 4 zurückgelegte Wegstrecke des Stromes stets zu gleichen Gesamtwegstrecken ergänzen und die übrigen Zuleitungswege ohnehin für alle Elektroden gleich sind.

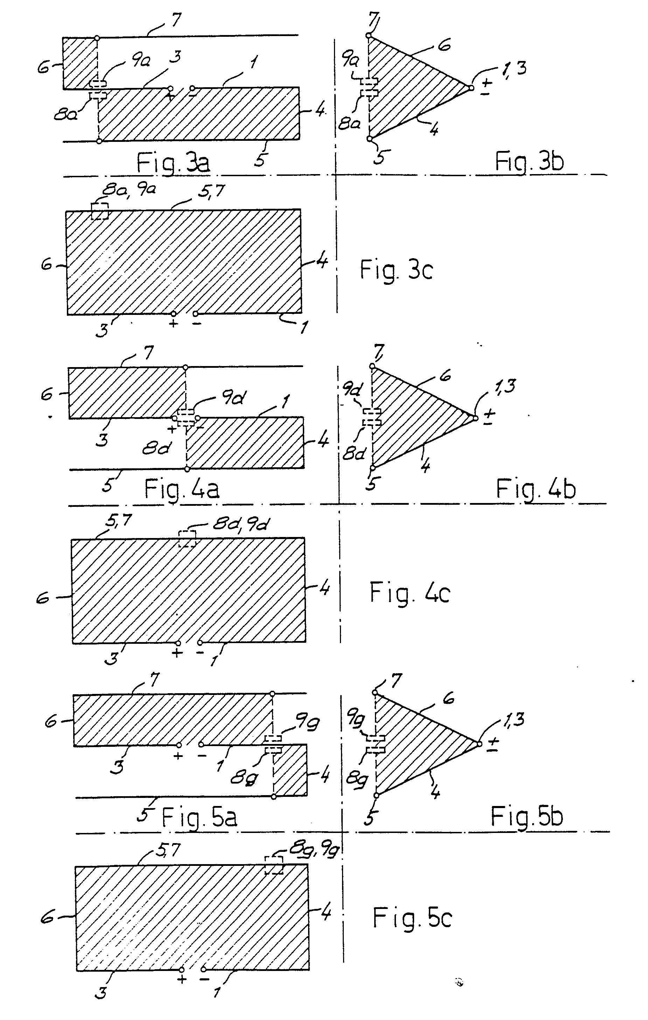

Um auch hinsichtlich der induktiven Widerstände für sämtliche Elektroden gleiche Voraussetzungen zu schaffen, wird gemäß einer ersten Ausführungsform der Erfindung die Anordnung derart getroffen, daß die Stromschienen 5 und 7 von der Mittellinie M der parallel zu diesen Stromschienen verlaufenden Sammelschienen 1 und 3 gleich weit entfernt angeordnet werden. Unter der Voraussetzung, daß überdies die Bänder 12 möglichst kurz gemacht werden, ergeben sich dann die in den Figuren 3 bis 5 dargestellten, von den Leitern umschlossenen Räume, wobei in den Figuren 3 bis 5 der Mittelpunkt der Sammelschiene 3 mit « + » und der Mittelpunkt der Sammelschiene 1 mit « — » bezeichnet ist.

Da in Figur 1 sieben Elektrodenpaare 8, 9 dargestellt sind und sich die Figuren 3 bis 5 speziell auf die Stromzuleitungen zu dem äußersten linken Elektrodenpaar, zum mittleren Elektrodenpaar und zum äußersten rechten Elektrodenpaar beziehen, wurden diese Elektrodenpaare 8, 9 durch die zusätzlichen Buchstaben a, d und g gekennzeichnet.

Wie man aus den Figuren 3a, 4a und 5a erkennen kann, fließt der Strom jeweils von der Sammelschiene 3 über die Leitung 6 in die Stromschiene 7 und längs dieser bis zur jeweils betrachteten Elektrode 9a, 9d oder 9g. Von dieser fließt der Strom durch das nicht dargestellte Schweißgut zu der der zugeordneten Gegenelektrode 8a, 8d oder 8g, sodann in die Stromschiene 5, längs dieser zur Leitung 4 und schließlich in die Sammelschiene 1. Wie die Draufsichten nach den Figuren 3c, 4c und 5c erkennen lassen, umfließt der Strom in jedem Falle ein Rechteck, das durch die Leiter 3, 6, 5 bzw. 7, 4 und 1 umschlossen ist. Wie weiter auch die Seitenansichten Figuren 3b, 4b und 5b zeigen, umfließt der Strom aber auch in jedem Falle ein Dreieck, dessen Eckpunkte die Leiter 1 bzw. 3, 5 und 7 sind. Daraus folgt, daß die vom Strom umflossenen Räume und damit auch die induktiven Widerstände für jede beliebige Elektrode gleich groß sein müssen.

Abgleichfehler, die von den, wenn auch möglichst kurz gehaltenen, so doch vorhandenen Bändern 12 herrühren, können gemäß der in Figur 2 gezeigten bevorzugten Ausführungsform der Erfindung dadurch behoben werden, daß in dem Leitungsweg 12 zwischen der Stromschiene 7 und jeder Elektrode 9 noch eine regelbare Impedanz 13 vorgesehen wird, die etwa aus zwei parallelen Stichleitungen 14, 15 und einem längs diesen verschiebbaren, leitenden Schieber 16 gebildet sein kann.

Um die induktiven Widerstände von vornherein klein zu halten, ist es wichtig, möglichst alle im Nahbereich der Stromwege angeordneten Maschinenteile, insbesondere die Trag- und Anpreßbalken für die Elektroden, aus nichtmagnetisierbarem Werkstoff, z. B. nichtmagnetisierbarem Stahl herzustellen ; zum gleichen Zweck sollen auch die Ständerteile des Maschinenrahmens in einem größeren, ein Mehrfaches des gegenseitigen Elektrodenabstandes betragenden Abstand von den äußersten Elektroden 8a, 9a und 8g, 9g angeordnet werden.

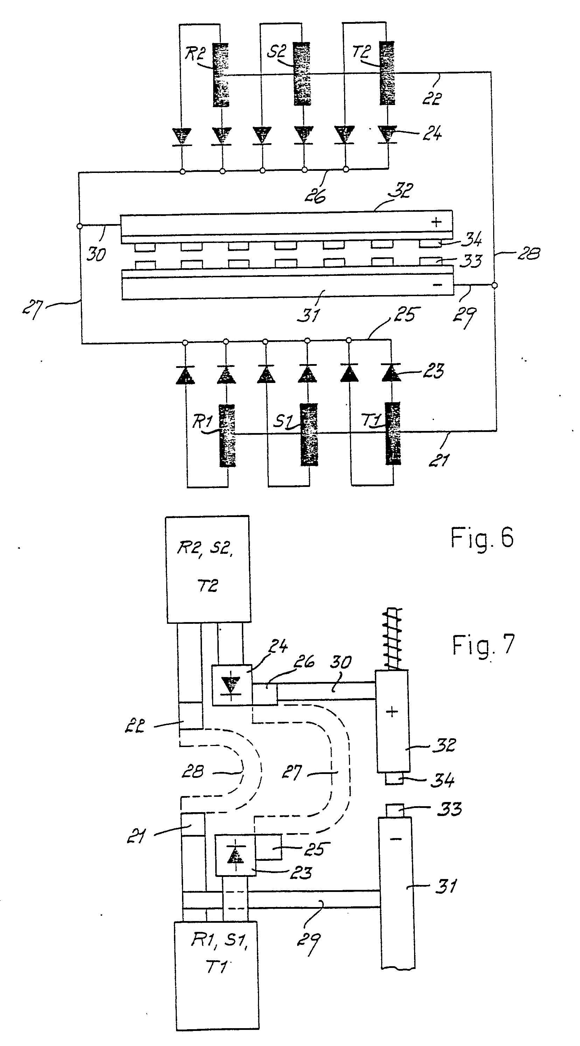

Eine besonders vorteilhafte Ausführungsform der Erfindung zeigen die Figuren 6 und 7. Bei dieser Ausführungsform sind zwei Sätze von Transformatoren R1, S1, T1 und R2, S2, T2 mit zugehörigen Gleichrichtereinheiten in gleichen Abständen von der Gitterherstellungsebene und auf gegenüberliegenden Seiten derselben angeordnet.

Die Mittelanzapfungen der dargestellten Sekundärwicklungen der Transformatoren sind mit den negativen Sammelschienen 21, 22 und die Gleichrichterdioden 23, 24 der Gleichrichtereinheiten sind mit den positiven Sammelschienen 25, 26 leitend verbunden. Mittels seitlich um die Schweißelektrodenreihen herumgeführter Bänder 27, 28 sind die beiden Gleichrichtereinheiten elektrisch parallel geschaltet, wobei das rechte Ende der unteren Stromschiene 31 über eine Leitung 29 mit den Sammelschienen 21, 22 und das linke Ende der oberen Stromschiene 32 über eine Leitung 30 mit den Sammelschienen 25 und 26 verbunden ist. Die Schweißelektroden 33, 34 können bei dieser Ausführungsform unmittelbar an den Stromschienen 31, 32 angeordnet sein oder von diesen selbst gebildet werden.

Durch den bezüglich der Gitterherstellungsebene völlig symmetrischen Aufbau der Speisekreise werden gleiche resultierende Wirk- und Blindwiderstände in den Stromwegen aller Schweißelektrodenpaare sichergestellt.

## Patentansprüche

1. Elektrische Vielpunkt-Widerstandsschweißmaschine, insbesondere zur Herstellung von geschweißten Gittern, bei welcher den Schweißstellen Stromimpulse von einer mittels Transformatoren gespeisten Gleichrichtereinheit über zwei quer zur Schweißmaschine verlaufende Stromschienen zugeführt werden, dadurch gekennzeichnet, daß die Stromschienen (5, 7 ; 31, 32) auf entgegengesetzten Seiten der Schweißebene angeordnet und die beiden Sammelschienen (1, 3 ; 21, 25) der Gleichrichtereinheit (2 ; 23) je mit einem der entgegengesetzten Enden der beiden Stromschienen (5, 7 ; 31, 32) verbunden sind und daß die sich hierbei infolge des unterschiedlichen Verlaufes der Stromschleifen über die einzelnen Schweißstellen ergebenden Unterschiede der für die Stromimpulse wirksamen Induktivitäten im wesentlichen ausgeglichen sind, indem die Sammelschienen (1, 3) der Gleichrichtereinheit (2) parallel zu den die Elektroden speisenden Stromschienen (5, 7) angeordnet sind und die Stromschienen (5, 7) gleich weit von der Mittellinie (M) der Sammelschienen (1, 3) entfernt sind und unmittelbar oder über kurze Leitungen (12) mit den Elektroden (8 bzw. 9) verbunden sind (Figuren 1, 2), oder indem mit den entgegengesetzten Enden der beiden Stromschienen (31, 32) die beiden Sammelschienen (22, 26) einer antisymmetrisch zur ersten Gleichrichtereinheit (23) auf der gegenüberliegenden Seite der Schweißebene angeordneten zweiten Gleichrichtereinheit (24) in Parallelschaltung verbunden sind (Figuren 6, 7).

2. Schweißmaschine nach Anspruch 1, dadurch gekennzeichnet, daß auf der einen Seite der Schweißebene die Schweißelektroden (8) unmittelbar von der einen Stromschiene (5) getragen oder gebildet sind, während sich auf der gegenüberliegenden Seite der Schweißebene einzeln verstellbare Elektroden (9) befinden, die mit der zweiten Stromschiene (7) über einstellbare Impedanzen (13), vorzugsweise Stichleitungen (14, 15) mit einem verstellbaren Schieber (16), enthaltende Leitungen (12) verbunden sind (Figuren 1, 2).

3. Schweißmaschine nach Anspruch 1, dadurch gekennzeichnet, daß beide Stromschienen (31, 32) Schweißelektroden (33, 34) tragen oder bilden und relativ zueinander beweglich sind und daß unterhalb der unteren Stromschiene (31) sowie oberhalb der oberen Stromschiene (32) je eine Gleichrichtereinheit (23, 24) angeordnet ist, wobei die beiden Gleichrichtereinheiten elektrisch parallel mit solcher Leitungsführung bezüglich der Schweißebene an die Stromschienen (31, 32) angeschlossen sind, daß sich die Stromschleifen (26, 30, 32, 34, 33, 31, 29, 28, 22 bzw. 25, 27, 30, 32, 34, 33, 31, 29, 21) oberhalb und unterhalb der Schweißebene für jede Schweißstelle auf Flächen angenähert konstanter Größe ergänzen und die Stromwege beiderseits der Schweißebene im wesentlichen gleich lang sind (Figuren 6, 7).

4. Schweißmaschine nach einem der Ansprüche 1 bis 3, dadurch gekennzeichnet, daß alle im Nahbereich der Stromschienen (5, 7) angeordneten Maschinenteile, insbesondere die Trag- und Anpreßbalken für die Elektroden (8, 9), aus nichtmagnetisierbarem Werkstoff, z. B. nichtmagnetisierbarem Stahl, bestehen.

5. Schweißmaschine nach einem der Ansprüche 1 bis 4, dadurch gekennzeichnet, daß die beiderseits des Anpreßbalkens für die Elektroden (8, 9) liegenden Ständerteile des Maschinenrahmens von den äußersten Elektroden (8a, 9a ; 8g, 9g) einen Abstand haben, der ein Mehrfaches des gegenseitigen Elektrodenabstandes beträgt.

## Claims

1. Electrical multispot resistance welding machine, in particular for manufacturing welded grids, in which current pulses from a rectifier unit supplied by transformers are delivered to the welding spots via two bus bars extending across the welding machine, characterized in that the bus bars (5, 7 ; 31, 32) are arranged on opposite sides of the welding plane and the two collecting bars (1, 3 ; 21, 25) of the rectifier unit (2 ; 23) are each connected with one of the opposed ends of the two bus bars (5, 7 ; 31, 32), and in that differences of the inductivities effective for the current pulses resulting from different patterns of the current loops across the individual welding spots are substantially balanced by arranging the collecting bars (1, 3) of the rectifier unit (2) in parallel to the bus bars (5, 7) feeding the electrodes, spacing the bus bars (5, 7) equally from the center line (M) of the collecting bars (1, 3) and connecting them directly or via short leads (12) with the electrodes (8 or 9) (Figures 1, 2), or by connecting the opposite ends of the two bus bars (31, 32) in parallel with the two bus bars (22, 26) of a second rectifier unit which is arranged antisymmetrically to the first rectifier unit (23) on the opposite side of the welding plane (Figures 6, 7).

2. Welding machine according to claim 1, characterized in that the welding electrodes (8) on one side of the welding plane are carried or formed directly by the one bus bar (5), whereas on the opposite side of the welding plane individually adjustable electrodes (9) are arranged and are connected with the second bus bar (7) via leads (12) containing adjustable impedances (13), preferably stub leads (14, 15) with an adjustable slide (16) (Figures 1, 2).

3. Welding machine according to claim 1, characterized in that both bus bars (31, 32) are carrying or forming welding electrodes (33, 34) and are moveable relative to one another, and in that a rectifier unit (23, 24) is arranged below the lower bus bar (31) as well as above the upper bus bar (32), these two rectifier units being connected electrically in parallel to the bus bars (31, 32) in such a lead configuration that the current loops (26, 30, 32, 34, 33, 31, 29, 28, 22 or 25, 27, 30, 32, 34, 33, 31, 29, 21, respectively) above and below the welding plane supplement each other for each welding spot to areas of substantially constant seize and that the current paths on both sides of the welding plane are substantially equally long (Figures 6, 7).

4. Welding machine according to one of the claims 1 to 3, characterized in that all machine parts adjacent the bus bars (5, 7), in particular the supporting and pressure bars for the electrodes (8, 9) consist of non-magnetic material, e. g. non-magnetic steel.

5. Welding machine according to one of the claims 1 to 4, characterized in that column parts of the machine frame arranged on both sides of the pressure bar for the electrodes (8, 9) are spaced from the outermost electrodes (8a, 9a ; 8g, 9g) a distance equal to a multiple of the distance between the electrodes.

## Revendications

1. Soudeuse à résistance électrique par points, en particulier pour fabriquer des treillis soudés, dans laquelle des impulsions de courant sont appliquées aux endroits à souder à partir d'une unité redresseuse alimentée au moyen de transformateurs par l'intermédiaire de deux barres omnibus qui s'étendent transversalement à la soudeuse, caractérisée en ce qu'on monte les barres omnibus (5, 7 ; 31, 32) sur les côtés opposés du plan de soudage, que l'on connecte les deux barres collectrices (1, 3 ; 21, 25) de l'unité redresseuse (2 ; 23) chacun à une des extrémités opposées des deux barres omnibus (5, 7 ; 31, 32) et que l'on égalise essentiellement les différences des inductances actives pour les impulsions de courant qui, dans le cas présent, résultent de l'allure différente des boucles de courant au-dessus des endroits de soudure individuels en montant les barres collectrices (1, 3) de l'unité redresseuse (2) parallèlement aux barres omnibus (5, 7) alimentant les électrodes, en disposant les barres omnibus (5, 7) à égale distance de l'axe médian (M) des barres collectrices (1, 3) et en les connectant (Fig. 1, 2) aux électrodes (8, 9) directement ou par l'intermédiaire de conducteurs courts (12) ou en connectant en parallèle (Fig. 6, 7) aux extrémités opposées des deux barres omnibus (31, 32) les deux barres collectrices (22, 26) d'une deuxième unité redresseuse (23) antisymétrique par rapport à la première et montée sur le côté opposé du plan de soudage.

2. Soudeuse suivant la revendication 1, caractérisée en ce que du premier côté du plan de soudage, les électrodes de soudage (8) sont portées ou formées directement par la première barre omnibus (5) tandis que du côté opposé du plan de soudage se trouvent des électrodes déplaçables individuelles (9) qui sont connectées (Fig. 1, 2) par l'intermédiaire de conducteurs (12) contenant des impédances réglables (13), de préférence des conducteurs de branchement (14, 15) munis d'un curseur déplaçable (16).

3. Soudeuse suivant la revendication 1, caractérisée en ce que les deux barres omnibus (31, 32) portent ou forment des électrodes de soudage (33, 34) et sont mobiles l'une par rapport à l'autre et en dessous de la barre omnibus inférieure (31) ainsi qu'au-dessus de la barre omnibus supérieure (32) est disposée chaque fois une unité redresseuse (23, 24) étant entendu que les deux unités redresseuses sont connectées électriquement en parallèle aux barres omnibus (31, 32) avec un tel guidage des conducteurs par rapport au plan de soudage que les boucles de courant (26, 30, 32, 34, 31, 29, 28, 22 et 25, 27, 30, 32, 34, 33, 31, 29, 21) se complètent au-dessus et en dessous du plan de soudage pour chaque endroit à souder sur des surfaces de grandeur à peu près constante et les trajets de courant de part et d'autre du plan de soudage sont essentiellement d'égale longueur (Fig. 6, 7).

4. Soudeuse suivant l'une quelconque des revendications 1 à 3, caractérisée en ce que toutes les pièces de machine disposées au voisinage des barres omnibus (5, 7) en particulier les poutres de support et de pression pour les électrodes (8, 9) sont faites d'une matière non magnétisable, par exemple d'acier non magnétisable.

5. Soudeuse suivant l'une quelconque des revendications 1 à 4, caractérisée en ce que les pièces de support du bâti de la machine disposées de part et d'autre de la poutre de pression pour les électrodes (8, 9) sont espacées des électrodes externes (8a, 9a ; 8g, 9g) d'une distance égale à un multiple de l'écartement réciproque des électrodes.

Fig.1

Fig. 2

Fig. 3a

Fig. 3b

Fig. 3c

Fig. 4a

Fig. 4b

Fig. 4c

Fig. 5a

Fig. 5b

Fig. 5c

2

**0 111 474**

Fig. 6

Fig. 7

3